# EUROPEAN PATENT SPECIFICATION

(11) **EP 3 584 763 B1**
(45) Date of publication and mention of the grant of the patent: **16.09.2026**
(21) Application number: 18754956.3
(22) Date of filing: 05.02.2018
(51) Int. Cl.: G06T 7/593, G06T 7/00, G06T 7/12, G08G 1/16, G06V 10/24, G06V 10/75, G06V 20/58, G06T 7/73

(54) **VEHICLE-MOUNTED ENVIRONMENT RECOGNITION DEVICE**
FAHRZEUGMONTIERTE UMGEBUNGSERKENNUNGSVORRICHTUNG
DISPOSITIF DE RECONNAISSANCE D'ENVIRONNEMENT MONTÉ SUR VEHICULE

(30) Priority: 14.02.2017 JP 2017025301
(43) Date of publication of application: 25.12.2019
(73) Proprietor: Astemo, Ltd., Tokyo (JP)
(72) Inventor: TAKEMURA Masayuki, Tokyo 100-8280 (JP); SHIMA Takeshi, Tokyo 100-8280 (JP); NAGASAKI Takeshi, Hitachinaka-shi Ibaraki 312-8503 (JP)
(74) Representative: Mewburn Ellis LLP
(86) International application number: PCT/JP2018/003738
(87) International publication number: WO 2018/150921

(56) References cited:
- EP-A1- 2 955 915
- WO-A1-2004/038660
- JP-A- 2009 237 652
- JP-A- H07 167 649

## Description

### Technical Field

The present invention relates to a vehicle-mounted environment recognition device.

### Background Art

Applications that recognize the environment around a vehicle by a camera installed on the vehicle have been commercialized increasingly. Among them, expected regions to which such applications are used include preventive safety technology to prevent accidents in advance using recognized objects, useful functions allowing moving comfortably and conveniently, and vehicle control technology aiming at autonomous traveling. In particular, the recognizing technology used in vehicle control requires high reliability.

There has been known a vehicle-mounted object detection device that appropriately recognizes pedestrians and prevents false detections even under complicated backgrounds such as pedestrian crossings where the same pattern appears repeatedly many times (e.g., see PTL 1).

EP2955915A1 discloses an around view provision apparatus and a vehicle including the same. The around view provision apparatus may include a plurality of cameras provided to capture images of different regions around the vehicle. A memory may be provided to store a reference image for each of the cameras. A processor may calculate offset information for at least one of the plurality of cameras based on a difference between the reference image for the camera stored in the memory and an image captured by the camera. Respective images captured through the plurality of cameras may be combined using the offset information so as to generate an around view image.

### Citation List

### Patent Literature

PTL 1: JP 2001-351200 A

### Summary of Invention

### Technical Problem

In the technology as disclosed in PTL 1, a three-dimensional shape that has been erroneously extracted in the repetitive pattern such as a pedestrian crossing is analyzed and detected to be a repetitive pattern, so that the three-dimensional estimation result of pedestrians who walks on the crossing is improved.

If, however, the captured image has a feature bias, the three-dimensional measurement precision is lowered.

It is an object of the present invention to provide a vehicle-mounted environment recognition device that prevents lowering three-dimensional measurement precision even when a captured image includes a feature bias.

### Solution to Problem

In order to achieve the above object, according to the present invention there is provided a vehicle-mounted environment recognition device as specified in claim 1. The vehicle-mounted environment recognition device may optionally be as specified in any one of claims 2 to 7.

### Advantageous Effects of Invention

According to the present invention, it is possible to suppress lowering in three-dimensional measurement precision even if a feature bias is present in a captured image. Other problems, configurations, and effects that have not been described above will be apparent from the following description of the embodiment.

### Brief Description of Drawings

[FIG. 1] FIG. 1 is a block diagram illustrating a configuration of a vehicle-mounted environment recognition device according to a first embodiment.
[FIG. 2] FIG. 2 is a block diagram illustrating a configuration of an in-window feature amount analysis unit.
[FIG. 3] FIG. 3 is a block diagram illustrating a configuration of an irregularity correction unit.
[FIG. 4] FIG. 4 is a block diagram illustrating a configuration of an alert control unit.
[FIG. 5] FIG. 5 illustrates the basic principle of triangulation based on stereo matching.
[FIG. 6] FIG. 6 is a diagram for explaining the basic principle of matching and a bias of the feature amount.
[FIG. 7] FIG. 7 is a diagram for explaining how the bias of the feature amount affects the matching.
[FIG. 8] FIG. 8 illustrates a method of analyzing vertical bias of the feature amount (in the case of a vertical bias texture).
[FIG. 9] FIG. 9 illustrates a method of analyzing vertical bias of the feature amount (in the case of a horizontal bias texture).
[FIG. 10] FIG. 10 illustrates a method of analyzing the horizontal bias of the feature amount (in the case of the vertical bias texture).
[FIG. 11] FIG. 11 illustrates the method of analyzing the horizontal bias of the feature amount (in the case of the horizontal bias texture).
[FIG. 12] FIG. 12 is a diagram for explaining the bias analysis on a feature amount histogram.
[FIG. 13] FIG. 13 illustrates a gravity center correction method during distance calculation.
[FIG. 14] FIG. 14 illustrates window setting for local matching.
[FIG. 15] FIG. 15 illustrates analysis of a road surface shape.
[FIG. 16] FIG. 16 illustrates detection of a solid object.
[FIG. 17] FIG. 17 is a flowchart of processing.
[FIG. 18] FIG. 18 illustrates a speed suppressing bump with a texture bias.
[FIG. 19] FIG. 19 is a block diagram illustrating a configuration of a vehicle-mounted environment recognition device (full software processing).
[FIG. 20] FIG. 20 is a block diagram illustrating a configuration of in-window texture analysis (full software processing).
[FIG. 21] FIG. 21 is a block diagram illustrating correction (full software processing).
[FIG. 22] FIG. 22 is a block diagram illustrating measurement of disparity distance (full software processing).

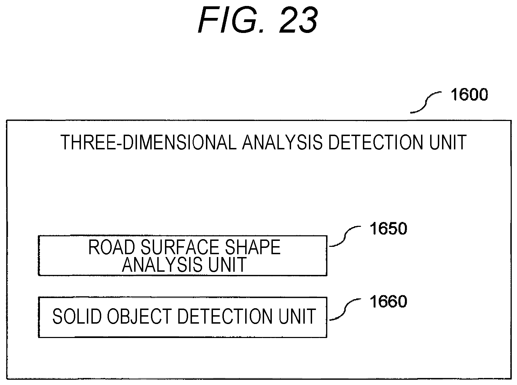

[FIG. 23] FIG. 23 is a block diagram illustrating a three-dimensional analysis detection unit (full software processing).
[FIG. 24] FIG. 24 is a flowchart of full software processing.

### Description of Embodiments

The configuration and operation of the vehicle-mounted environment recognition device according to first and second embodiments of the present invention will be described below with reference to the accompanying drawings.

The vehicle-mounted environment recognition device captures an image of the environment around the vehicle using, for example, a camera installed in the vehicle, and determines from the three-dimensional information obtained by the camera whether a collision occurs even if the vehicle progresses. At the same time, even when no collision occurs, analysis is made from the three-dimensional road surface information obtained as to whether there is a step that gives a large vibration to the vehicle, and on the basis of the analysis result, the suspension or brake which suppress vibration of the vehicle is controlled.

In other words, in the embodiment of the present invention, measurement of irregularity on the road surface ahead of the vehicle is performed using a stereo camera and, on the basis of the measurement, suspension control is performed for more comfortable driving. For example, by softening the suspension in front of the step, semi-active control is performed to alleviate the impact when the step is passed, or the suspension is shortened according to the height of the step to alleviate the impact applied to the vehicle body.

Although the problem of the present embodiment is partially overlapped with the above-described purpose, the problem of the present embodiment is to decrease, when the step factor (for example, speed bump) existing on the road surface has a dense texture feature (large luminance change) than the road surface, the errors that occur in the three-dimensional measurement results.

### (First Embodiment): Hardware Processing

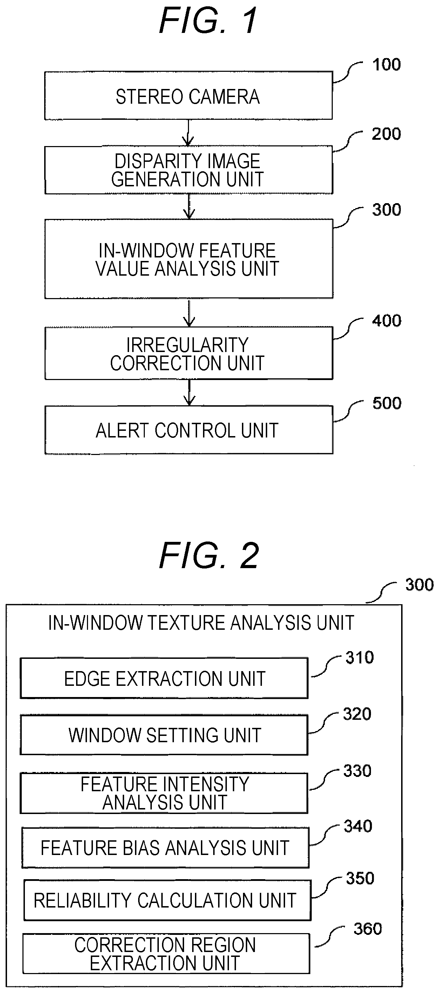

### <FIG. 1: Outline of Vehicle-Mounted Environment Recognition Device>

FIG. 1 is a block diagram illustrating a configuration of a vehicle-mounted environment recognition device according to a first embodiment. Cameras arranged in parallel to the right and left are used as a stereo camera to recognize vehicle-mounted ambient environment. A stereo camera 100 acquires right and left images captured by the right and left cameras. A disparity image generation unit 200 performs stereo matching using the right and left images to generate a disparity image. The stereo camera performs three-dimensional measurement on the basis of the principle of triangulation by identifying the same portion of the same object in the right and left images.

In other words, the stereo camera 100 (imaging unit) captures a pair of a left image (first image) and a right image (second image). The disparity image generation unit 200 generates the disparity image by calculating the disparity between a matching window (region) of the right image (second image) and a matching window (region) of the left image (first image) which is most similar to the matching window of right image (second image).

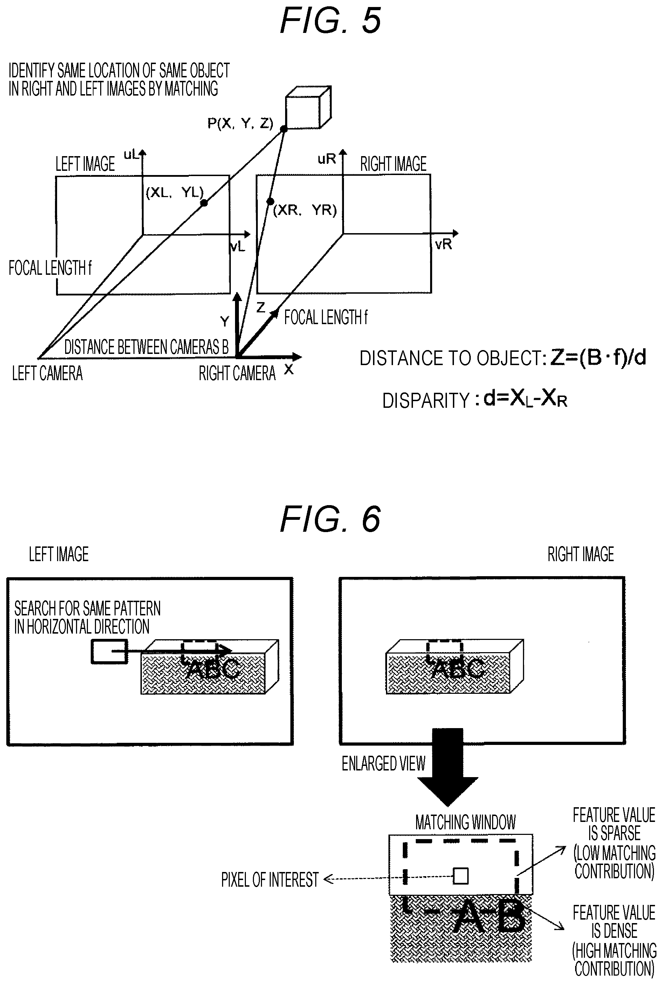

FIG. 5 illustrates the basic principle of triangulation based on stereo matching. As illustrated in FIG. 5, the lower left corner of the square is captured on right and left camera images at coordinates (XL, YL) on the left image and coordinates (XR, YR) on the right image. When considering the right image as a center, a small rectangular region on the right image is set as the matching window to identify the same portion on the image. Based on the right image, the same imaging location is identified on the left image by searching by shifting the small rectangular region in the matching window. If the cameras of the same specification installed completely in parallel have been subjected to distortion correction, the same point imaged in front of the cameras is always imaged at the same height on the right and left images. Therefore, on the left image, while the matching window is shifted in the horizontal direction, similarity is compared to find the most similar portion. In this way, the same location captured by the right and left cameras is identified. With distortion-free cameras or distortion-corrected cameras installed completely in parallel with each other, it is assumed that the distance between the cameras is B and the focal lengths of the right and left cameras are f. Furthermore, assuming that the identified same location is at the coordinates (XL, YL) on the left image and the coordinates (XR, YR) on the right image, and that a difference between the images is a disparity d = (XL - XR), according to the principle of triangulation, the depth can be calculated as Z = (B x f)/d, where x is a multiplication operator.

The disparity image generation unit 200 in FIG. 1 receives the right and left images as input, sets a small rectangular region based on the right image, and searches for a matching window of the left image having the highest similarity to the small rectangular region of the right image serving as the matching window. A difference d between the matching positions of the left image and right image, which is a search result, is saved as a result of a disparity image and a disparity image is generated.

Next, an in-window feature amount analysis unit 300 (in-window texture analysis unit) analyzes texture in the matching window described above. In the present embodiment, the image processing portion is implemented by hardware by a field programmable gate array (FPGA), in addition to a central processing unit (CPU), and the disparity image generation unit 200 and the in-window feature amount analysis unit 300, which have a high processing load, are implemented by the FPGA. Acquisition of camera images, an irregularity correction unit 400, and an alert control unit 500 are implemented by the CPU. The in-window feature amount analysis unit 300 analyzes the texture in the matching window of the right image used for disparity image generation. The in-window feature amount analysis unit 300 analyzes a texture amount and a texture bias and identifies a matching window in a state in which a distance error is likely to be applied in matching.

The irregularity correction unit 400 determines the matching window with a large distance error on the basis of the result of analysis by the in-window feature amount analysis unit 300. A concern is that, because the distance error is large, the distance error calculated from the disparity corresponding to the matching window may also be large.

Therefore, the irregularity correction unit 400 corrects this distance or makes the distance as the invalid point. The irregularity correction unit 400 then analyzes road surface shape and three-dimensional object detection or measurement using a corrected disparity image or a disparity image in which a large-error point is made invalid disparity.

Finally, using these results, the alert control unit 500 sounds an alarm in an early stage when there is an object determined to be an obstacle, or activates emergency braking at timing when it is determined that a collision is likely to occur. Furthermore, if the obstacle is a bump that the tires are likely to get over, the alert control unit 500 changes the suspension setting softer or adjusts the length of the suspension, in order to make the driving more comfortable with less vibration.

### <FIG. 2 In-Window Feature Amount Analysis Unit>

The in-window feature amount analysis unit 300 analyzes the amount of texture and the bias of texture in the stereo matching window. In the present embodiment, such analysis is performed by hardware processing of the FPGA. Therefore, separately from the timing of stereo matching, an edge extraction unit 310 performs for the right image horizontal edge extraction having a luminance change in the horizontal direction of the image and vertical edge extraction having a luminance change in the vertical direction on the image.

In the case where the vertical luminance change on the image continues in the horizontal direction, such as the upper end of the fence or the stop line on the road, when such texture is searched in the horizontal direction for distance measurement in the stereo matching, it is difficult to identify the location by matching even though the texture exists. On the other hand, for the feature such as the contour of a utility pole or a solid object in which the horizontal brightness change continues in the vertical direction, the position of stereo matching can easily be determined precisely during searching in the horizontal direction. For the stereo matching using the above information, a possibility of occurrence of error or reliability of the stereo matching is determined.

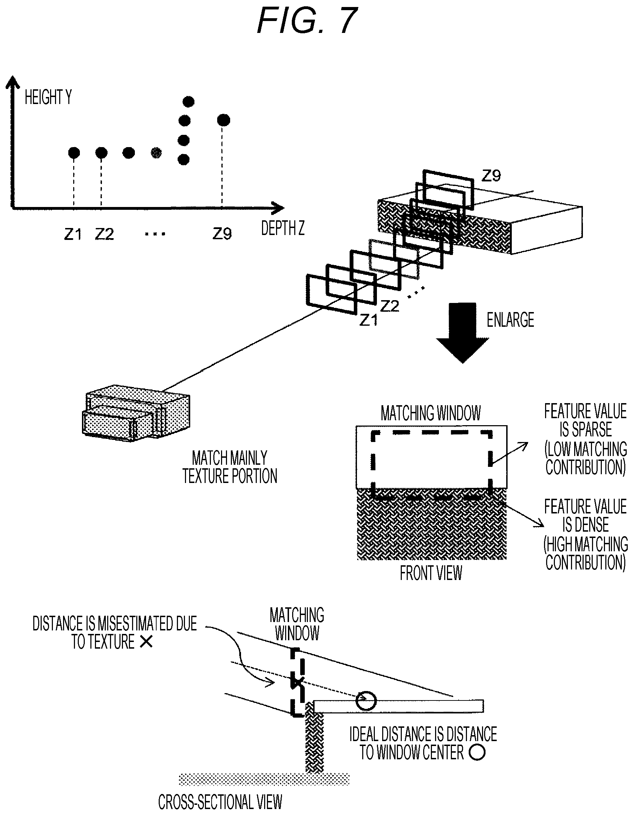

Here, by referring to FIGS. 6 and 7, an example scene of actual occurrence of the measurement error of the three-dimensional distance is first described, in order to describe the measurement error of the distance affected by the matching window in a currently-available typical stereo camera. First, the relationship between the basic principle of stereo matching and the texture in the matching window is described by referring to FIG. 6. Assuming that the right and left images are already completely parallelized by camera installation conditions, calibration, and so on, a disparity image based on the right image is generated. In the present embodiment, when the generation of the disparity image is centered on the right image and the matching window is set around a pixel of interest, the pixel of interest is set from the top left within a range where the matching window does not go outside the image. The pixel of interest is thus set by shifting the pixel one by one to generate a disparity image. (Note that the resolution of the original image and the disparity image may be different. If it is desired to generate the disparity image having a half resolution relative to the original image, the pixel of interest may be set for every other pixel with respect to the original image.) The pixel of interest is shifted by one pixel, while the matching window has a size. In the present embodiment, the matching window is sized vertically 9 × horizontally 15 pixels and, basically, the distance of the center of the matching window is measured.

However, in practice, the size of the matching window is vertically 9 × horizontally 15 pixels, which is substantially large, so that the texture in the matching window may change depending on which part in the matching window is measured. It may be considered that the smaller the matching window, the more precise the result of distance measurement is obtained. However, when considering whether matching is carried out at the correct position, the larger the matching window, the larger the amount of information, so that the matching error can be further prevented.

In other words, it is apparent that the size of the matching window is closely related to, or is in trade-off with, the possibility of decreasing matching error, the measurement error increase and the quantization error increase. For this reason, it is not sufficient to simply reduce the size of the matching window even for only improving the distance measurement precision. The size of the matching window needs to be selected in view of the matching error rate of the obtained disparity image or the invalid disparity region where the matching place is unknown.

In the present embodiment where the size of the matching window is vertically 9 × horizontally 15 pixels, the bias of the texture in the matching window is illustrated in FIG. 6. The matching window of a pixel of interest set on the right image, as illustrated on the right side of FIG. 6, is considered. The surface with texture of a certain solid object occupies about lower 20% of the matching window, and the surface with less texture occupies about upper 80% of the matching window. In such a case, the upper portion of the matching window where the feature amount is sparse and the luminance change is small does not contribute to the positioning of the matching that searches in the horizontal direction. On the other hand, if there is a texture having a dense feature amount with a large luminance change in about lower 20%, the matching position is determined depending on whether the texture in the lower part matches. Therefore, although the distance of the pixel of interest should originally be determined, the lower 20% of the screen returns the measurement result of that distance, and although the three-dimensional distance of the pixel of interest should be measured, the calculated distance is the three-dimensional distance of the portion where the texture is dense.

FIG. 7 illustrates the details of this error. In the upper part of FIG. 7, which positions the matching windows arranged in the vertical direction on the image refer to in the real space is illustrated.

Similarly to the above example, an enlarged view of the example matching window provided on the upper side of the solid object is illustrated as an example in the middle part of FIG. 7. Again, in this drawing, the feature amount is sparse in the upper part of the matching window, and the feature amount is dense in the lower part of the matching window. In such a case, as illustrated in a cross-sectional view in the lower part of FIG. 7, an intended distance is a distance to the center of the matching window, so that a three-dimensional distance of the position indicated by a circle on the upper surface of the solid object should be measured. However, due to the bias in the texture, the three-dimensional distance at the center of the matching window is erroneously measured at a position marked x, the distance of which is equivalent to the distance to the side surface of the solid object having the dense texture. Thus, the error may occur as to the position where the distance is measured in the matching window due to the bias of the texture.

Next, the size of the matching window used in stereo matching is also set for the edge image by a window setting unit 320 illustrated in FIG. 2. For each pixel of the calculated disparity image, the edge in the matching window of the right image can be analyzed in subsequent calculations on the basis of the right image with which the range of the edge in the original image referred can be determined.

Next, a feature intensity analysis unit 330 analyzes how much edge amount exists. Here, the average edge intensity in the vertical and horizontal directions is calculated individually. Although positive values and negative values are available for the vertical edge and the horizontal edge, an average of the absolute values of the edge intensity is used herein. Since it is desired to know how many edges, which function as the deciding factors of matching, exist in the matching window, the average of the absolute values of vertical and horizontal edges is used. The feature intensity analysis unit 330 calculates the average of the absolute values of the luminance change of the vertical edge and the horizontal edge of one pixel in the matching window.

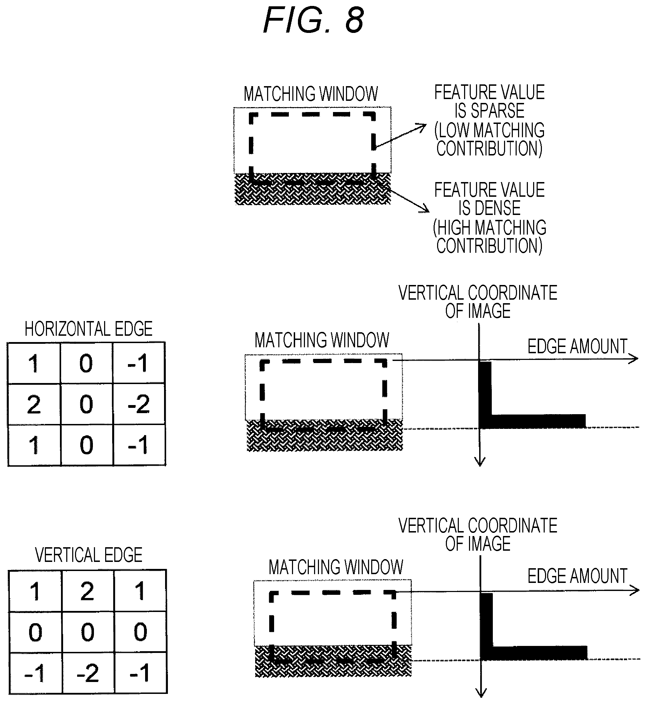

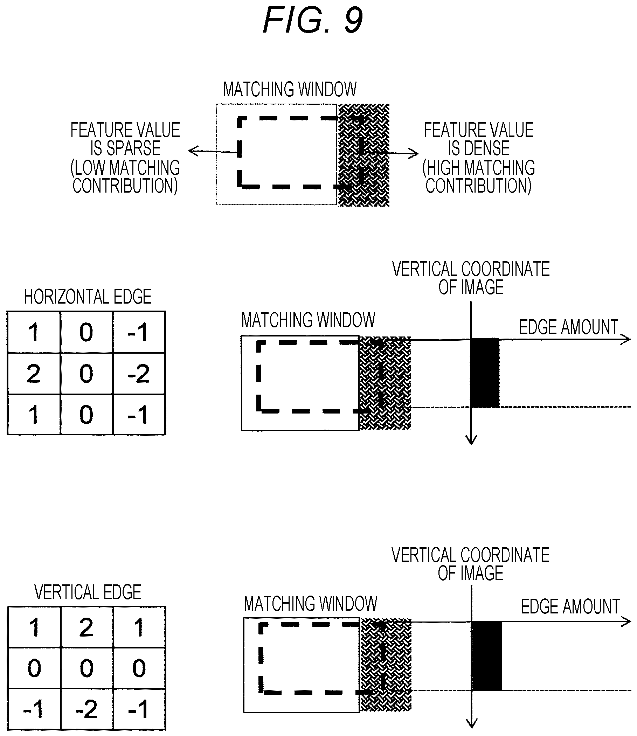

A feature bias analysis unit 340 (feature amount bias analysis unit) analyzes the bias of the existing position of the edge in the matching window. The feature bias analysis unit 340 analyzes the bias of the edge positions of the vertical and horizontal edges extracted by the edge extraction unit 310. FIGS. 8 and 9 illustrate methods of analyzing the vertical bias of the edge position. The example of FIG. 8 is an analysis result when there is a bias in the vertical direction, and the example of FIG. 9 is an analysis result when there is a bias in the horizontal direction.

First, the analysis result of FIG. 8 is described. This example illustrates the analysis result of vertical bias when the region with a small amount of feature with small texture change exists in the upper part and the region with a large amount of feature with large texture change exists in the lower part. The feature bias analysis unit 340 performs vertical bias analysis on both vertical and horizontal edges. The horizontal edge is illustrated on the top of FIG. 8 and the edge filter used is illustrated on the left side of FIG. 8. The number of edges in the matching window with an intensity equal to or greater than a certain threshold value is projected horizontally in a histogram. The results are illustrated on the right. For both vertical and horizontal edges, the feature amount is aggregated in the lower part of the screen. It can be seen that, when matching is performed using the image in this matching window, the matching result is substantially based on the feature amount in the lower part of the screen.

Next, the example of FIG. 9 illustrates the analysis result of vertical bias when the region with a small amount of feature with small texture change exists in the left side and the region with a large amount of feature with large texture change exists in the right side. Vertical bias analysis is performed on both vertical and horizontal edges. Since the edge bias exists in the horizontal direction, according to the vertical bias analysis to check whether there is a bias in the vertical direction, it is found that, as illustrated on the right side of FIG. 9, the edge amount equal to or greater than a certain intensity is not biased for both horizontal and vertical edges and is almost constant. The vertical bias analysis is performed here to check whether there is a bias in the presence of edges in the vertical direction. Note that the hardware processing is assumed herein, and the detailed analysis is performed by the irregularity correction unit 400 in the latter stage.

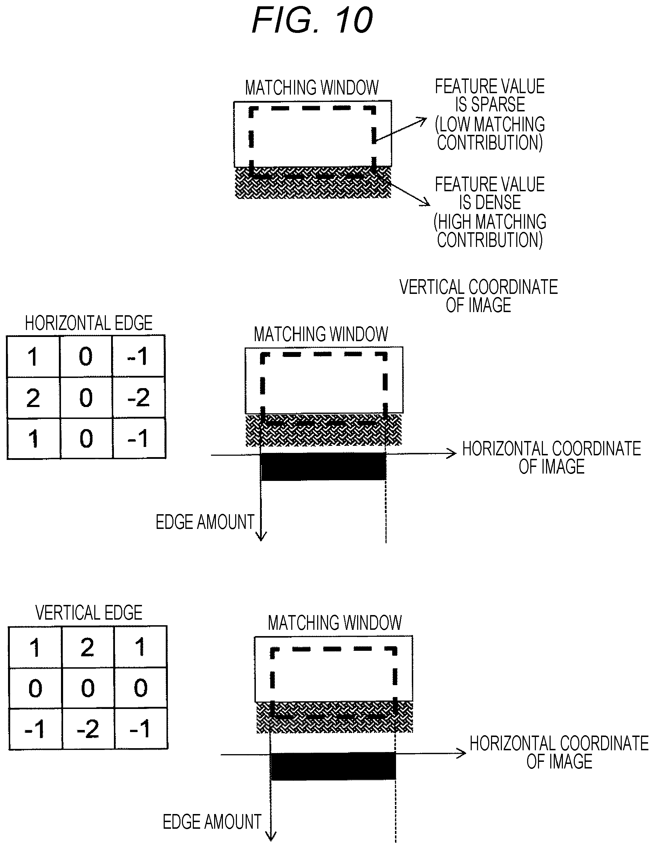

Next, FIG. 10 illustrates the analysis result as to whether the horizontal bias exists in the vertical bias texture. The horizontal and vertical edges are extracted from the image with the vertical bias illustrated in the top part of FIG. 10, and for the horizontal edge, the distribution of the horizontal edge is analyzed in a histogram as to whether the horizontal edge in the matching window having the intensity equal to or higher than a certain threshold value differs for each vertical coordinate. Indeed, the pattern does not have the horizontal bias, so that it can be seen that the edge amount is constant in the horizontal direction and there is no bias in the horizontal edge amount in the horizontal direction. Then, the vertical edge is analyzed similarly, resulting in no horizontal bias.

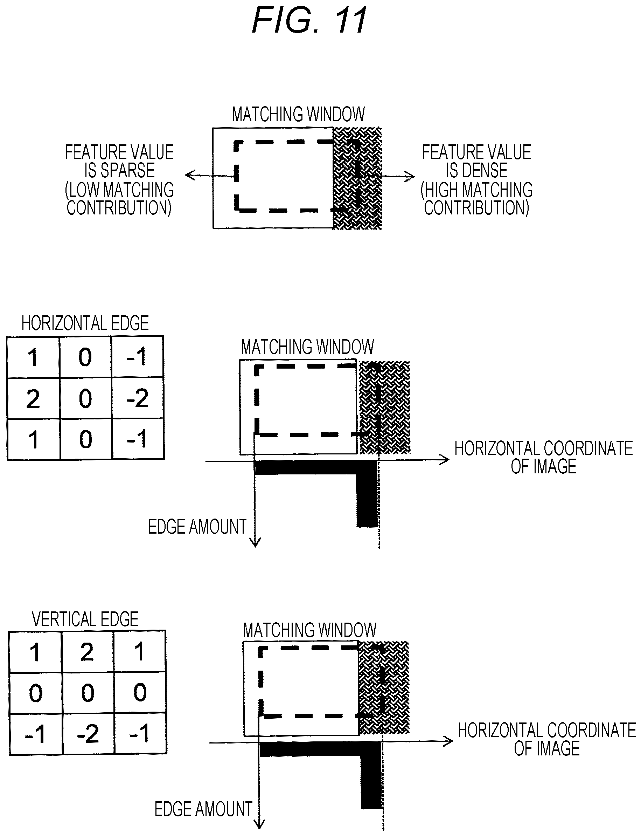

Finally, the distribution is analyzed in a histogram as to whether the horizontal edge in the matching window having the intensity equal to or higher than a certain threshold value illustrated in FIG. 11 including a similar horizontal bias differs for each horizontal coordinate. Since the texture is biased to the right, if an edge amount equal to or larger than a certain threshold value is expressed in a histogram, the texture amount (edge amount) is larger on the right on the horizontal axis. This is also performed to the horizontal edge and the vertical edge.

As described above, the feature bias analysis unit 340 analyzes the edge bias of the matching window (region) of the right image (second image) using a histogram in which the edge amount of the matching window of the right image is projected in the vertical direction or horizontal direction of the right image. That is, the feature bias analysis unit 340 uses the histogram in which the edge amount of the matching window of the right image is projected in the vertical direction or the horizontal direction of the right image, and determines whether the region of the matching window of the right image can be segmented into a first region having a share of the edge less than a first threshold value and a second region and a second region having a share of the edge equal to or greater than the first threshold value. Thus, the edge bias can be analyzed quantitatively.

Analysis of the vertical edge may be omitted to reduce processing load. This is because, in the case of stereo matching where horizontal searching is assumed, the edges continue in the horizontal position for a horizontally extending rod, fence, or building having many vertical edges, so that the change in luminance in the vertical direction continues in the horizontal direction. This does not become a factor of the change of similarity of matching in the horizontal direction and, although there is a feature amount of the luminance change, it is not ensured to be a feature in identifying the position in the horizontal direction. Of course, if there is only one vertical edge that is not continuous, it can be a feature to specify the horizontal position, but this may be omitted because the presence of the vertical and horizontal edges is not sufficient as a possibility.

Furthermore, in order to reduce processing load, it is confirmed if there is a minimum feature intensity in the feature intensity analysis unit 330, and the calculation order of a reliability calculation unit 350 which is described later is used if this is faster. Thus, if there is no bias in the texture or if the texture amount is biased to one point, it is confirmed the stereo matching of that portion may be reliable.

Conversely, even if the texture is biased, if the texture intensity and quantity are too weak, it is determined that recalculation is not necessary. This eliminates the feature bias analysis itself for the road surface such as black asphalt or white concrete, and the feature bias analysis is performed only at locations where the texture bias is likely to occur. This makes it possible to efficiently reduce feature bias analysis with heavy processing load and subsequent correction processing of measurement results.

In other words, when the average of the absolute values of the edge intensity is less than the second threshold value or the edge amount is less than a third threshold value, the feature bias analysis unit 340 does not analyze the edge bias of the matching window (region) of the right image (second image). In other words, if the average of the absolute values of the edge intensity in the matching window of the right image is equal to or greater than the second threshold value and the edge amount of the matching window of the right image is equal to or greater than the third threshold value, the feature bias analysis unit 340 determines whether the region of the right image can be segmented into a first region having a share of edge is less than the first threshold value and the second region having a share of edge is equal to or greater than the first threshold value. If the average of the absolute values of the edge intensity of the matching window of the right image is less than the second threshold value, or the edge amount of the matching window of the right image is less than the third threshold value, the feature bias analysis unit 340 does not determine whether right image can be segmented into the first region and the second region.

In the image processing of the conventional typical stereo camera, as illustrated in the lower part of FIG. 7, it has been described that the error may occur in the measurement distance. Using the result of the feature bias analysis unit 340, the region in which the error in the measured distance is likely to occur is identified. In the present embodiment, the reliability calculation unit 350 illustrated in FIG. 2 firstly calculates whether there is a feature amount for which stereo matching is reliable. Using the entire histogram analyzed by the feature bias analysis unit 340, based on the total number of edges equal to or greater than a certain threshold, regardless of the edge bias in the region having less than a certain number of edges the reliability calculation unit 350 lowers the reliability as being unreliable.

Furthermore, the reliability calculation unit 350 calculates the reliability by considering the absolute value of the edge intensity in the matching window calculated by the edge intensity analysis unit (feature intensity analysis unit 330), and also considering the small number of edges and the weak edge intensity. An invalid disparity addition unit 440 finally registers as an invalid disparity for each disparity with extremely low reliability, and masks the disparity so as not to be used for distance calculation.

Next, using the histogram of the edge amount analyzed by the feature bias analysis unit 340, a correction region extraction unit 360 determines whether the distance measurement result should be corrected. Whether the distance measurement result should be corrected is when there are regions with different distances in the matching window. If there is no large bias in the feature amount of the texture, the measurement result of the three-dimensional distance of the region having a large area in the matching window is returned, so that no problem occurs.

However, in the case where a large bias occurs in the texture amount as illustrated in FIGS. 8 to 11, even though it is expected to measure the three-dimensional distance of the region having only a small amount of such feature as occupying the most part of the area in the matching window, the distance of a portion of the matching window having a large feature amount is measured, even though its area occupies only a portion of the matching window. This impedes the analysis of the three-dimensional shape.

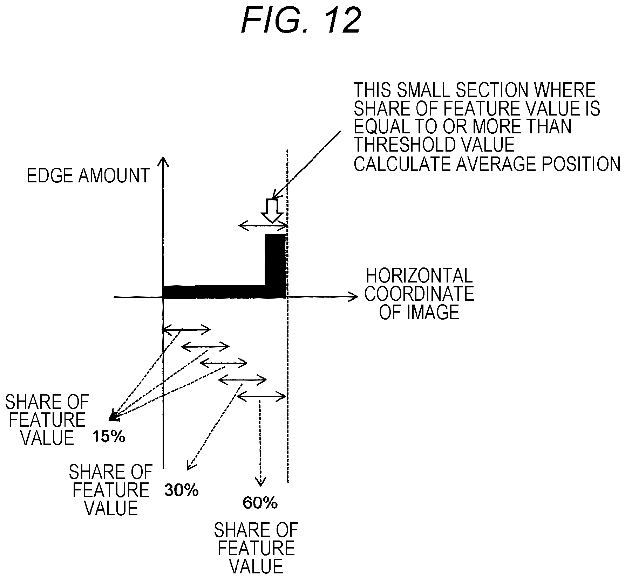

As described above, it is considered that the measurement error of the distance occurs when the feature amount is biased to a specific portion in the region, although its area is small. As illustrated in FIG. 12, the edge amount is plotted as the feature amount in a histogram in the horizontal direction of the image. In the case where the integral value of the edge amount in a fixed interval is calculated and, if the result is more than half of the total edge amount, it is considered that the edges in the range are aligned as being regarded as a major factor of the matching, thus the matching position is determined.

In the example of FIG. 12, since the edge amount of the feature amount is 60%, which exceeds 50%, in the entire feature amount in the rightmost small section, it is determined that the possibility of occurrence of the error in the distance measurement result is high.

Alternatively, when the average or the mode of the histogram is far from the center of the histogram, it may be determined that the distance measurement correction is necessary.

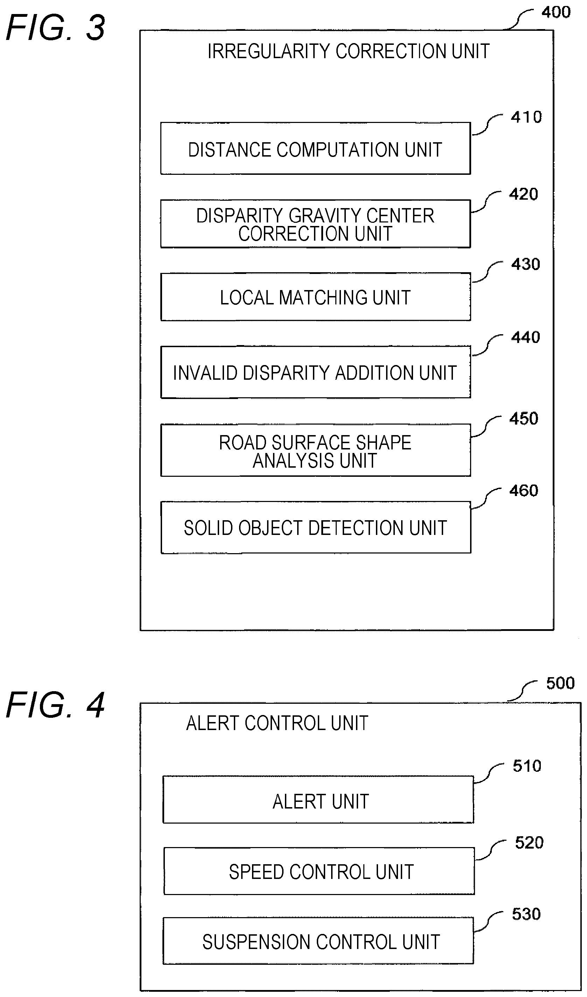

### <FIG. 3 Irregularity Correction Unit>

An irregularity correction unit 400 of FIG. 3 is described.

The irregularity correction unit 400 in FIG. 3 calculates the distance using the disparity which is the result obtained from the stereo matching and uses, in the distance information, the texture bias information that has been analyzed in advance to correct or invalidate the distance of the region where the texture bias is present and the distance error is likely to occur. Furthermore, the irregularity correction unit 400 performs more precise three-dimensional analysis compared to the conventional method by analyzing the road surface shape or detecting the solid object using the disparity information or the distance information.

In other words, when the matching window (region) of the right image (second image) can be segmented into the first region having the share of the edge (feature of the image) less than the first threshold value and the second region having the share of the edge equal to or greater than the first threshold value, the irregularity correction unit 400 (correction unit) inhibits the calculation of the distance, reduces the size of the matching window of the right image, or corrects the position of the pixel of interest in the matching window of the right image. In one example of reducing the size of the matching window of the right image, the irregularity correction unit 400 calculates the disparity individually for the first region and the second region, in the case where the matching window of the right image can be segmented into the first region having the share of the edge less than the first threshold value and the second region having the share of the edge equal to or greater than the first threshold value. Details thereof will be described later

First, a distance calculation unit 410 calculates the distance using the result of stereo matching implemented by the hardware as it is. In other words, the distance calculation unit 410 calculates the distance representing a depth of the pixel of interest of the matching window of the right image (second image) on the basis of the disparity between the matching window (region) of the right image (second image) and the matching window (region) of the left image (first image) which is most similar thereto.

Next, three methods for correcting the distance error, which are performed after identifying the region where the distance error is likely to occur, are described. After any one of the methods is performed, the shape analysis of the road surface or the detection of the solid object may be performed to improve the precision of the correction.

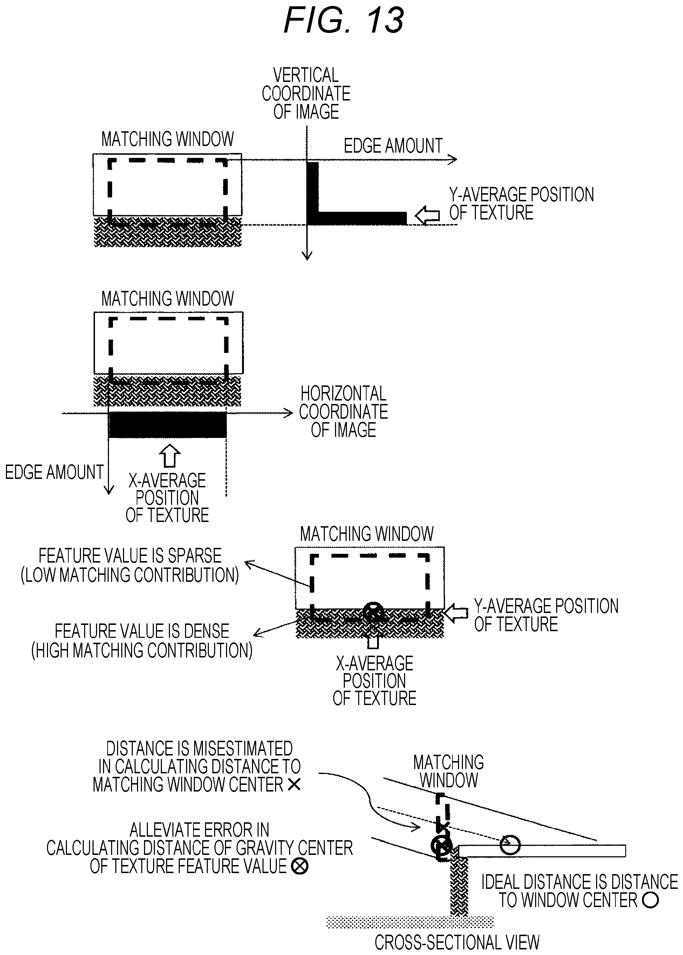

FIG. 13 illustrates a method of correcting the distance error by a disparity gravity center correction unit 420. First, using the analysis result of the in-window feature amount analysis unit 300, the region for which the three-dimensional distance is to be corrected, that is, the result of the correction region extraction unit 360 is used, and any one of the three types of correction processing is applied only to this region.

The bias of the texture of the matching window, as illustrated in FIG. 12 and calculated by the feature bias analysis unit 340, is determined using the Y average position and the X average position, whereby a position of the gravity center of the texture in the matching window is determined. Although the three-dimensional distance is to be calculated on the premise that the disparity at the center of the matching window is returned, it is considered herein that in texture matching, the distance of the gravity center position of the texture is output on the basis of the bias of the feature amount and, on the basis of the output result, the disparity gravity center correction unit 420 illustrated in FIG. 3 corrects the three-dimensional position.

In other words, the irregularity correction unit (correction unit) includes the disparity gravity center correction unit 420 that calculates the average position of the edges of the matching window (region) of the right image (second image) and corrects the position of the pixel of interest of the matching window of the right image to the average position. This decreases the distance error due to the edge bias.

As a result, as illustrated in the lower part of FIG. 13, although the three-dimensional distance to the center of the matching window is to be determined, the ideal calculation distance expected is assumingly at the point o. However, with the simple stereo matching performed, the distance to the center of the matching window is erroneously estimated at the distance to the point marked x which is equivalent to the lower part of the matching window. Finally, however, the calculated three-dimensional distance is regarded as the distance to the gravity center of the texture, that is, the three-dimensional distance is estimated to be at the position marked x in the circle where the error is reduced. Thus, the measurement point is further corrected to the correct position to achieve the measurement with less distortion of the size of the object.

A local matching unit 430 illustrated in FIG. 3 once discards the matching result itself of the region to be corrected, and performs the stereo matching of the point again by software processing. At this time, assume that, in the prior art (or before discarding the matching result), the stereo matching is performed with a relatively large window of vertically 12 pix by horizontally 24 pix, the window is segmented into smaller stereo matching windows. The size of the matching window may be vertically 6 pix by horizontally 12 pix each for four windows segmented by half vertically and horizontally without considering the distribution of the texture inside the windows. These four windows may be used for the stereo matching.

In other words, when there is the edge bias in the matching window (region) of the right image (second image), the irregularity correction unit (correction unit) includes a local matching unit that decreases the size of the matching window of the right image to match the matching window of the right image and the matching window (region) of the left image (first image) which is most similar to the matching window of the right image. This increases the possibility of decreasing the distance error.

As a result, the smaller the window, the smaller the distance measurement error caused by the size of the matching window. This method, however, does not consider the bias of the feature amount in the segmented smaller matching windows, so that, in some cases, the distance measurement error may occur in some of the segmented windows, although the window is smaller than before. Such a distance measurement error may be controlled not to generate a larger error, from the viewpoint of decreasing the distance measurement error. By simple segmentation method, however, the minimum area is needed to prevent further decrease of the matching ability itself which leads to more matching errors or no-match, thus causing a trade-off with respect to the precision.

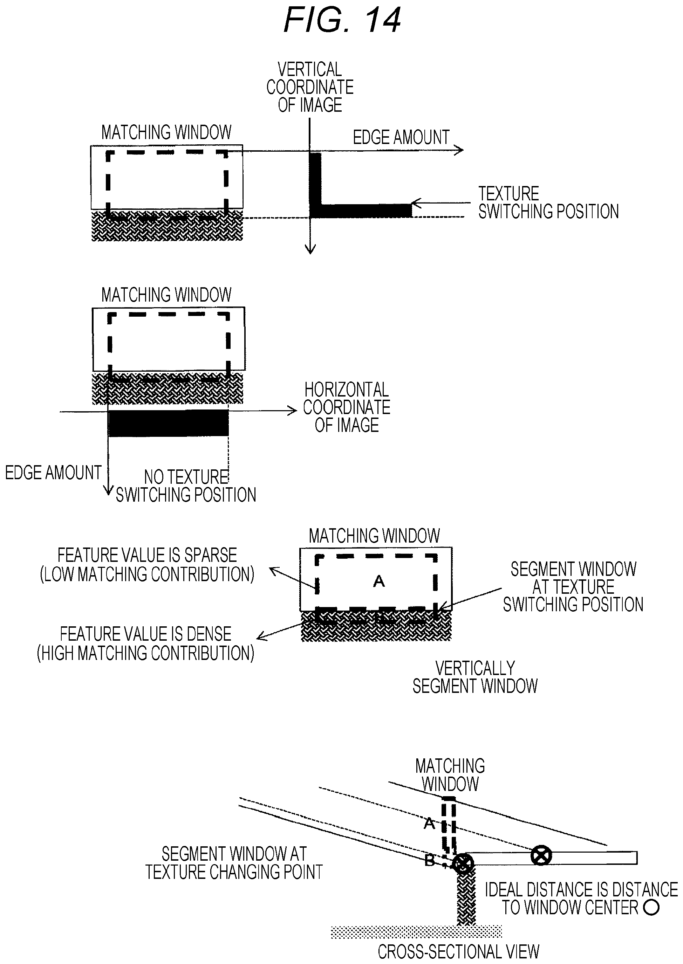

Meanwhile, as another method, as illustrated in FIG. 14, the local matching unit 430 may adaptively change the matching window size with reference to the analysis result of the texture feature amount.

In other words, the irregularity correction unit 400 (correction unit) includes the local matching unit 430 that matches the region (first region) in which the feature amount is sparse with the matching window (region) of the left image (first image) which is most similar thereto, and matches the region (second region) in which the feature amount is dense with the matching window of the left image which is most similar thereto. This decreases the distance error due to the edge bias.

In this case, the matching window does not become smaller than necessary, so that this method results in smaller errors if the texture change point can be properly recognized.

In addition, as a method to improve the precision, other than the disparity gravity center correction unit 420 and the local matching unit 430 described above, the invalid disparity addition unit 440 determines that the disparity corresponding to the correction region extraction unit 360 (the disparity of the region determined to be corrected by the correction region extraction unit 360) includes the error, and registers the disparity as an invalid disparity. The disparity information registered as the invalid disparity is treated as one that does not exist as having many errors, and is used for analysis of the road surface shape and the detection of the solid object.

In other words, the irregularity correction unit 400 (correction unit) includes the invalid disparity addition unit 440 which invalidates the disparity in the case where the matching window (region) of the right image (second image) can be segmented into the first region having the share of the edge (feature of the image) less than the first threshold value and the second region having the share of the edge equal to or greater than the first threshold value.

That is, the feature bias analysis unit 340 analyzes the edge bias of the matching window (region) of the right image (second image), and the invalid disparity addition unit 440 invalidates the disparity when there is an edge bias.

By invalidating the disparity, the distance calculation unit 410 is prohibited from calculating the distance.

As a result, the distance error due to the edge bias can be decreased.

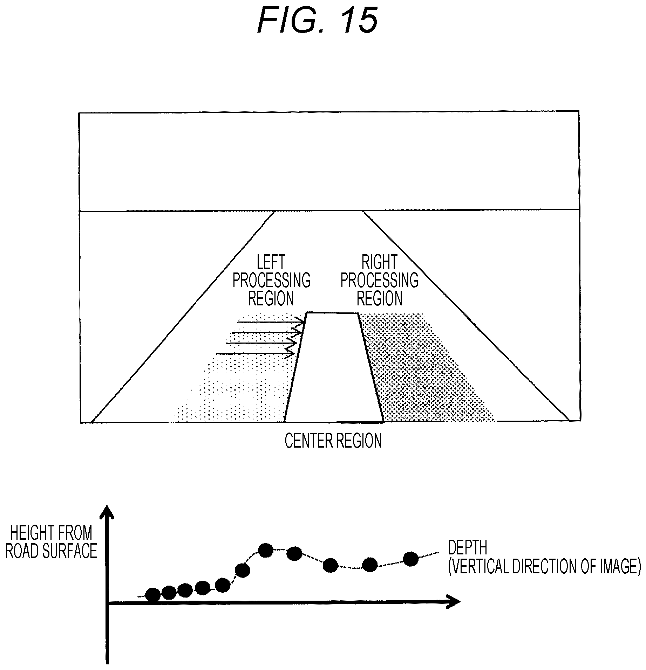

A road surface shape analysis unit 450 illustrated in FIG. 3 analyzes the road surface shape as illustrated in FIG. 15. First, as illustrated in the upper part of FIG. 15, the road surface shape analysis unit 450 preprocesses the analysis of the road surface shape in regions of the road surface segmented into three regions including left, center, and right regions. In the preprocessing, focusing on the left processing region, the disparity values on the horizontal line having the same height on the image in the left processing region are represented in a histogram. At this time, the mode of the histogram is taken. As a result, representative disparity values can be obtained for each horizontal line on the image. This is performed in the left processing region, the center region, and the right processing region.

For the left processing region and the right processing region among them, the road surface shape analysis unit 450 predicts and sets a region through which the tires will pass. The road surface shape analysis unit 450 estimates a vehicle width from the camera installed about the own vehicle, calculates the tire positions, estimates the location where the tires will pass from the behavior of the own vehicle, and analyzes, about the estimated line, the road surface shape on the right and left individually for the regions with a width of about 90 cm. By considering that the road surface shape does not change horizontally in the processing region, undulation in the depth direction is analyzed while it is regarded that there is no undulation in the horizontal direction.

The disparity values for each horizontal line on the image are subjected to distance conversion and plotted on a three-dimensional sectional view of the road surface shape as if observed from the side, as illustrated in the lower part of FIG. 15. At this time, noise removal processing is performed by using, for example, the analysis result of the road surface shape of the preceding frame by considering outstanding points as noise factors of the solid object or the like. In the lower part of FIG. 15, a gently undulated road surface is plotted on the left with one location of the road surface being raised. Thus, by using the disparity value of the stereo camera, the road surface shape of the road on which the own vehicle is supposed to travel is analyzed in the right and left regions to output the undulation of the road surface shape.

Furthermore, the estimation processing of the road surface has also been performed in the center region because the shape analysis of the entire road expanding in front of the own vehicle is briefly performed using the analysis result of the right, left, and center road surface shapes. At this time, there is a possibility that the solid object may be included in the region, so that the noise reduction processing needs to be performed to exclude the solid object from the analysis data of the road surface shape by, for example, performing analyzing horizontally on the screen and eliminating the result of the processing region whose height is outstandingly high. It is also considered that there is no change in the road surface shape in the horizontal direction, and the inclination condition of the road surface is analyzed. The analysis result is used to analyze the search for the foot position for the next solid object detection.

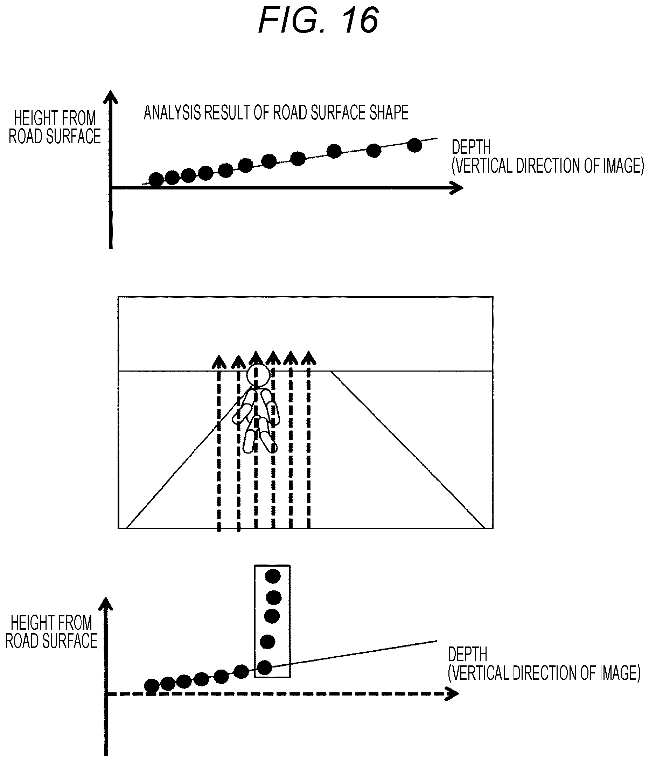

A solid object detection unit 460 illustrated in FIG. 3 searches for a solid object shape having a height of 50 cm or more standing vertically on the road surface using the road surface estimation result of the road surface shape analysis unit 450. The outline of the processing is illustrated in FIG. 16. The result illustrated on FIG. 16 is a cross-sectional view of the road surface shape viewed from the side to illustrate the height of the road surface.

The solid object detection unit 460 detects the solid object standing on the road surface shape using the result of the relative positional relationship between the road surface shape and the camera.

Before the solid object is found, the solid object detection unit 460 searches for a candidate expected to be the solid object standing on or above the road surface. In this processing, as illustrated in the middle of FIG. 16, the three-dimensional shape is searched from the bottom of the screen to analyze the shape of the part of the solid object candidate standing on or above the road surface. The processing for one arrow extending from the lower part of the screen in the center of FIG. 16 is described by referring to the graph illustrated in the lower part of the reference to the lower graph in FIG. 16. When the three-dimensional shape is searched from the bottom of the screen, the road surface shape continues for a while, so that it becomes a three-dimensional shape along the road surface shape illustrated in FIG. 16, but the solid object such as a pedestrian may enter depending on the location to be searched. In the road surface shape analysis, the solid object is excluded. However, when the solid object is analyzed as it is, it becomes a three-dimensional shape which stands vertically on the road surface plane. As can be seen from the graph in the lower part of Fig. 16, the three-dimensional shape of the solid object portion rises vertically.

Regarding this shape as a partial shape of one solid object candidate, the processing further proceeds to process the line next to the center line, as illustrated in the center of FIG. 16. This is continued till several solid object candidates gather at the same place, and the gathered objects are determined by the solid object detection unit 460 as the solid object. Furthermore, the solid object detection unit 460 determines and identifies, for example, whether the solid object is treated as a candidate for pedestrian or vehicle according to the size of the solid object.

### <FIG. 4 Alert Control Unit>

Finally, the alert control unit 500 illustrated in FIG. 4 is described. The alert control unit 500 sounds an alarm to alert danger or call attention to the driver, and controls the vehicle speed, or controls the suspension to eliminate unpleasant driving according to the results of the road surface shape analysis and the solid object detection. In the road surface shape analysis, if there is a bump, a step, or the like for speed control and it is determined that a large impact is expected when the vehicle enters with the current vehicle behavior, it is possible to alleviate the expected impact on the own vehicle by gradual breaking or controlling hardness or length of suspension for speed control.

With the road surface shape measured in the present embodiment, it is possible to analyze the road surface shape more precisely, so that more correct control of the vehicle and more appropriate decrease of the impact on the own vehicle are achieved. In the analysis of the road surface shape, if the depth of the bump or step is around 10 cm, a smaller object is also determined as to whether the object has a sufficient height to be overcome or the vehicle must stop before the solid object, such as a car stop rising vertically, on the smoothly undulating road surface shape.

Similarly, for the solid object detected by the solid object detection unit 460, the alert control unit 500 also considers the behavior of the own vehicle and sounds an alarm when the possibility of collision increases, while executing emergency braking when the collision inevitably occurs if the vehicle advances any further, thus ensuring safety of the vehicle.

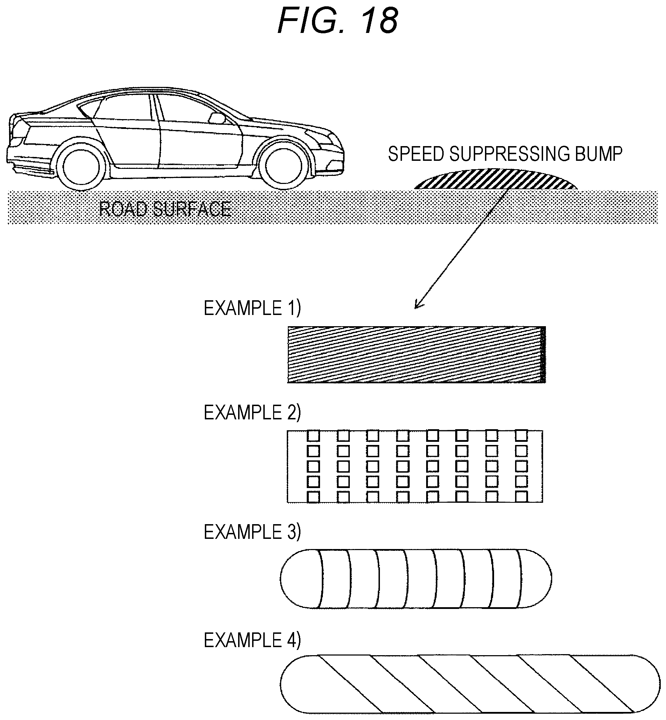

Finally, an example of the actual road surface shape on which the texture bias is likely to occur is illustrated in FIG. 18. According to the analysis of the road surface shape in the present embodiment, the measurement results of the speed decreasing step illustrated in the examples 1, 2, 3, and 4 of FIG. 18 are used for the purpose of controlling the suspension. When such a step for speed control is made of the same texture and material as the road surface, the texture bias as described in the present embodiment is unlikely to occur. However, even when the material is the same, the bias may occur if the stepped shape is formed and looks like an edge on the image due to the shade of the stepped portion.

In the case of the examples of the speed control steps as illustrated in FIG. 18, if these steps are installed on the road surface made of asphalt or concrete, the texture is obviously different from the surrounding texture, thus causing the texture bias as described in the embodiment. Therefore, usual texture mapping is not sufficient to analyze the three-dimensional shape precisely, as the step becomes large and analysis of the three-dimensional shape is difficult.

More precise three-dimensional measurement results can be calculated by analyzing the texture bias and correcting the three-dimensional measurement results or deleting points with large measurement errors according to the present embodiment. Therefore, it is possible to appropriately control the suspension for suppressing the vibration of the vehicle, control speed for reducing the impact at the time of passing the steps and the like.

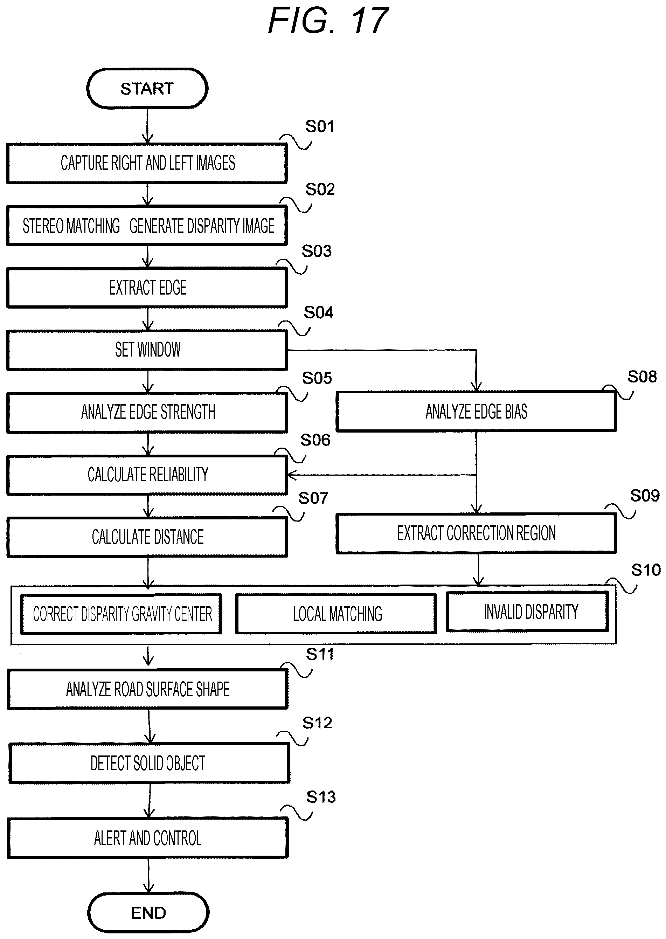

### <FIG. 17 Outline of Processing Flow>

S01: First, the stereo camera 100 captures right and left images.

S02: The disparity image generation unit 200 performs stereo matching using the acquired right and left images to generate a disparity image.

S03: The edge extraction unit 310 of the in-window feature amount analysis unit 300 extracts vertical edges and horizontal edges of the right image used as a base image for stereo matching.

S04: The window setting unit 320 of the in-window feature amount analysis unit 300 sets the matching window size at the time of stereo matching for each pixel of the disparity image and uses the window size for analysis of the texture inside. That is, the range of the texture used for the generated disparity is determined here.

S05: The feature intensity analysis unit 330 of the in-window feature amount analysis unit 300 analyzes the edge intensity of the texture in one type of texture analysis. Since it is desired to know how many edges, which function as the deciding factor of matching, exist in the matching window, the average intensity value of the vertical and horizontal edges is used. The feature intensity analysis unit 330 calculates the average of the absolute values of the luminance change of the vertical edge and the horizontal edge of one pixel in the matching window.

S06: The reliability calculation unit 350 of the in-window feature amount analysis unit 300 uses the sum of the histogram analyzed by the feature bias analysis unit 340 and, on the basis of the total number of edges equal to or greater than a certain threshold value, lowers the reliability in the region including the edge number equal to or smaller than a certain edge number, because the stereo matching itself is not reliable in such a region regardless of the bias of the edges. Furthermore, the reliability calculation unit 350 calculates the reliability by considering the absolute value of the edge intensity in the matching window calculated by the edge intensity analysis unit (feature intensity analysis unit 330), and also considering the small number of edges and the weak edge intensity. The invalid disparity addition unit 440 of the irregularity correction unit 400 finally registers the invalid disparity for each disparity with extremely low reliability, and masks the disparity so as not to use the disparity in the distance calculation. For example, the invalid disparity addition unit 440 invalidates the disparity when the average of the absolute values of the edge intensities of the matching window (region) of the right image (second image) is less than the second threshold value, or the edge amount of the matching window of the right image is less than the third threshold value.

S07: The distance calculation unit 410 of the irregularity correction unit 400 calculates the distance of the pixels other than the pixels of the disparity image that has been determined to be low in the reliability calculation and invalidated. The road surface shape analysis unit 450 of the irregularity correction unit 400 calculates the depth from disparity, the height from horizontal and vertical positions on the image, and the horizontal position.

S08: The feature bias analysis unit 340 of the in-window feature amount analysis unit 300 analyzes the bias of the existing position of the edge in the matching window. The feature bias analysis unit 340 analyzes the bias of the edge positions of the vertical and horizontal edges extracted by the edge extraction unit 310. The feature bias analysis unit 340 calculates whether there is a bias in the edge, that is, the result of presence/absence of the bias, and the average position and the boundary position of the bias, if present. If there is one such texture analysis result, it becomes possible to use it for correction of the three-dimensional measurement distance in S10.

S09: The correction region extraction unit 360 of the in-window feature amount analysis unit 300 puts together the analysis results of the edge bias results, selects the region for performing correction of the three-dimensional measurement result, and passes the information to S10. Here, the region determined to be biased may be passed as it is to the correction execution of S10, or the region narrowed for the region in which analysis results such as disparity gravity center correction or local matching have been provided and the region has a relatively high edge intensity or high reliability may be used. This is because, if the local matching is performed again, the CPU load is high in itself, so that it uncertain if the correct disparity is obtained when the region with lower edge intensity and reliability is recalculated. In such a case, at the time of extracting the correction region, the three-dimensional measurement result may be corrected by narrowing the regions with which a certain reliability result is likely to be obtained.

S10: At least one processing among the disparity gravity center correction by the disparity gravity center correction unit 420, the local matching by the local matching unit 430, and the disparity invalidation by the invalid disparity addition unit 440 is executed with respect to the region extracted as the correction region. In disparity gravity center correction, the measurement of the three-dimensional shape with less error is performed by correcting the height and the horizontal position indicated by the depth, instead of correcting the depth. In the local matching, more precise three-dimensional measurement is performed by re-segmenting the matching window on the basis of the analysis result of the texture bias along the boundary where the tendency of the texture changes and performing the stereo matching. Alternatively, the designated region is divided simply into half vertically and horizontally, and the stereo matching processing is performed again in each of the four windows. Alternatively, if the processing time is insufficient, the unreliable three-dimensional measurement result may be invalidated as invalid disparity.

S11: The road surface shape analysis unit 450 of the irregularity correction unit 400 analyzes the road surface shape after the correction of the three-dimensional measurement result.

S12: The solid object detection unit 460 of the irregularity correction unit 400 detects the solid object.

S13: The alert control unit 500 sounds an alarm or performs control on the basis of the analysis result of the road surface shape and the detection result of the solid object.

As described above, according to the present embodiment, it is possible to prevent the decrease of the three-dimensional measurement precision even when the captured image has the feature bias.

### (Second Embodiment)

Full Software Processing: In a second embodiment, a case where the entire processing is by full software processing (processing by the CPU) is described. It is, of course, possible to process only some functions of the second embodiment by the hardware processing. However, as the strong point of the software processing, the software configuration is considered to be more efficient, for example, in the software processing such as changing the method of post-processing according to the value of the calculation result in the middle.

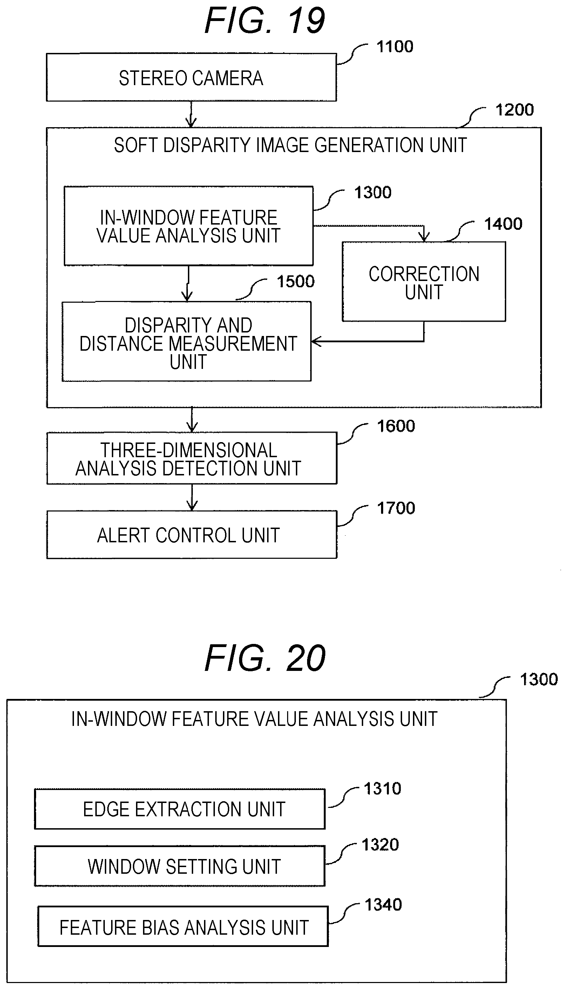

FIG. 19 illustrates the configuration of a vehicle-mounted environment recognition device (full software processing). With an image captured by a stereo camera 1100, a soft disparity image generation unit 1200 generates a disparity image using stereo matching. Before the stereo matching, an in-window feature amount analysis unit 1300 analyzes texture in the stereo matching window. If there is no bias in the texture, a disparity and distance measurement unit 1500 simply performs the stereo matching. If the texture bias is present, a correction unit 1400 performs correction processing (any one of disparity gravity center correction, local matching, and disparity invalidation). Thereafter, a disparity and distance measurement unit 1500 performs three-dimensional measurement from the calculated disparity. Furthermore, using these results, a three-dimensional analysis detection unit 1600 analyses the road surface shape and detects the solid object. Finally, an alert control unit 1700 sounds an alarm or controls the vehicle on the basis of the analysis result of the road surface shape and the detection result of the solid object.

FIG. 20 illustrates in-window texture analysis of the software processing. Since the stereo matching and the like are process by the CPU, the texture analysis is performed in advance before the stereo matching. If the texture bias is present, the correction processing is performed first to omit the stereo matching by which it is already known to generate the error can be omitted.

First, an edge extraction unit 1310 extracts edges in advance over the entire screen. Next, a window setting unit 1320 sets a window for performing stereo matching. A feature bias analysis unit 1340 analyzes the feature bias for each set window. Every time the window setting unit 1320 sets the window, the feature bias analysis unit 1340 performs processing to perform feature bias analysis. If the feature is not biased, the process is branched to the normal disparity and distance measurement unit 1500. If the feature bias is present, the process is branched to the correction unit 1400.

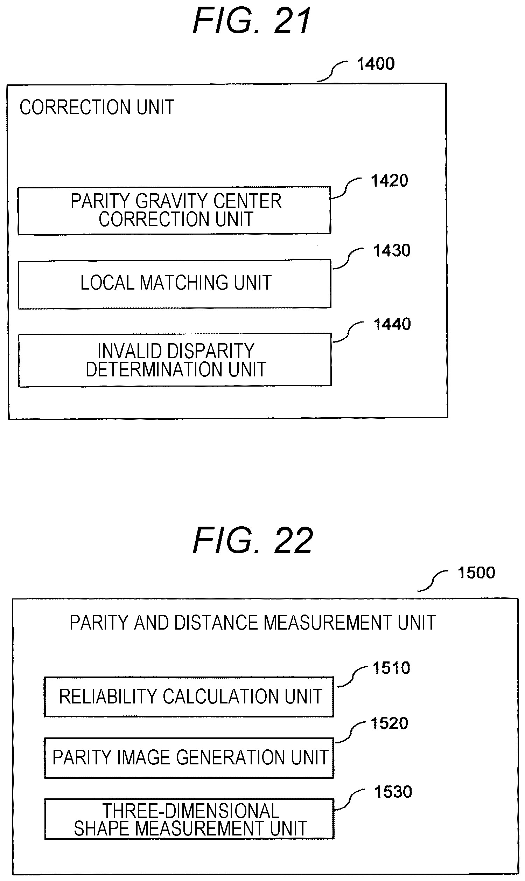

FIG. 21 illustrates the correction unit 1400. If it is determined that the feature is biased, the processing in the matching window is passed to the correction processing. The correction unit 1400 performs the same processing as that performed by the disparity gravity center correction unit 420, the local matching unit 430, and the invalid disparity addition unit 440 similarly to the case where the hardware processing of stereo matching is assumed. Unlike the hardware processing, however, the disparity gravity center correction unit 1420, the local matching unit 1430, and the invalid disparity determination unit 1440 perform the processing steps for each pixel of the disparity. The correction unit performs any one of the processes, and passes the result to the disparity and distance measurement unit 1500.

In the disparity and distance measurement unit 1500 illustrated in FIG. 22, a reliability calculation unit 1510 performs processing similar to the processing performed in the case where the hardware processing of the stereo matching is assumed, that is, the processing similar to the processing performed by the reliability calculation unit 350, by using the texture analysis result and the processing result of the correction processing, if performed. However, in the case of the software processing of the stereo matching, the reliability calculation unit 1510 calculates the reliability one pixel at a time, and a disparity image generation unit 1520 performs disparity image generation one pixel at a time. If, however, there is an invalid result or a local matching result from the result is present from the analysis by the correction unit 1400 that has been analyzed as having the texture bias, the disparity image generation here is omitted.

Even in the correction unit 1400, there is no actual disparity in the case where only the result of the disparity gravity center correction processing is available. Accordingly, the disparity is generated here and combined with the gravity center information, while a three-dimensional shape measurement unit 1530 measures the three-dimensional shape. In normal processing, the three-dimensional shape measurement unit 1530 calculates three-dimensional points for the generated each disparity one pixel by one pixel.

When the results of these three-dimensional shape measurement units 1530 are all available, a road surface shape analysis unit 1650 and a three-dimensional object detection unit Implemented by 1660 perform processing similar to the road surface shape analysis or the solid object detection similar to the processing performed in the case where the hardware processing of the stereo matching is assumed.

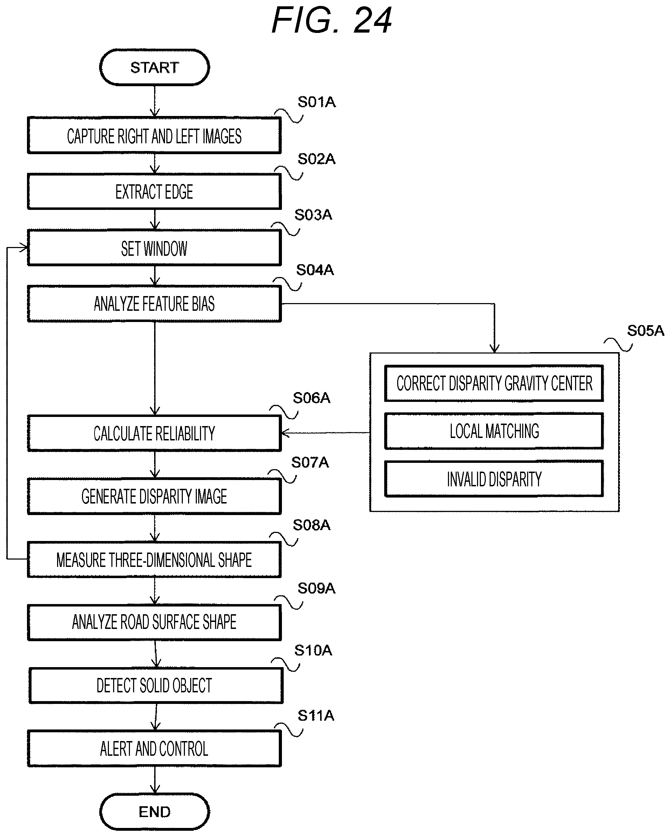

FIG. 24 illustrates a flowchart in the case of full software processing.

S01A: First, the stereo camera captures right and left images.

S02A: The edge extraction unit 1310 extracts vertical edges and horizontal edges of the right image used as a base image for stereo matching.

S03A: The window setting unit 1320 sets the matching window size at the time of stereo matching for each pixel of the disparity image.

S04A: The feature bias analysis unit 1340 analyzes the texture inside the set matching window. The feature bias analysis unit 1340 analyzes the bias of the existing position of the edge in the matching window. The feature bias analysis unit 1340 analyzes the bias of the edge positions of the vertical and horizontal edges extracted by the edge extraction unit 1310. The feature bias analysis unit 1340 calculates the result of presence/absence of the bias, the average position in the presence of bias, and the boundary position in the presence of bias. Here, if it is determined that the texture bias is present, the process proceeds to the calculation in the correction unit 1400, and if it is determined that there is no bias, the process proceeds to the disparity and distance measurement unit 1500.

S05A: The correction unit 1400 performs one or more processes of disparity gravity center correction, local matching, and disparity invalidation on one matching window that is analyzed as having a bias in the feature amount. In disparity gravity center correction, the measurement of the three-dimensional shape with less error is performed by correcting the height and the horizontal position indicated by the depth, instead of correcting the depth. In the local matching, more precise three-dimensional measurement is performed by re-segmenting the matching window on the basis of the analysis result of the texture bias along the boundary where the tendency of the texture changes and performing the stereo matching. Alternatively, the designated region is divided simply into half vertically and horizontally, and the stereo matching processing is performed again in each of the four windows. Alternatively, if the processing time is insufficient, the unreliable three-dimensional measurement result may be invalidated as invalid disparity.

S06A: Using the total histograms analyzed in feature amount bias analysis S04A, on the basis of the total number of edges greater than or equal to a certain threshold, the stereo matching itself is performed regardless of the edge bias in the region including the edge bias less than a certain number of edges. The reliability calculation unit 1510 reduces the reliability because matching is not reliable. Furthermore, by considering the absolute value edge intensity in the matching window calculated by the edge intensity analysis unit and by also considering that the small number of edges and the weak edge intensity, the reliability calculation unit 1510 calculates the reliability. The invalid disparity determination unit 1440 finally performs registration as invalid disparity for each disparity with extremely low reliability, and masks the disparity so that the disparity cannot be used for distance calculation.

S07A: The disparity image generation unit 1520 performs stereo matching using the right and left images to generate a disparity image. If it is determined that the correction unit 1400 has already calculated it, or it is determined to be invalid because the bias is very unreliable, the process step is skipped.

S08A: On the basis of the disparity image calculated in S07A, the three-dimensional shape measurement unit 1530 measures three-dimensional points. This is the end of the process looping in units of one pixel. Finally, the three-dimensional shape is measured by performing measurement of the three-dimensional point on all pixels.

S09A: After the three-dimensional measurement result is corrected, the road surface shape analysis unit 1650 analyzes the road surface shape.

S10A: The solid object detection unit 1660 detects the solid object.

S11A: The alert control unit 1700 sounds an alarm or performs control on the basis of the analysis result of the road surface shape and the detection result of the solid object.

In other words, in the case where the matching window (region) of the right image (second image) can be segmented into the first region in which the share of the edge (image feature) is less than the first threshold value and the second region in which the share of the edge is equal to or greater than the first threshold value, the CPU (processor) segments the matching window of the right image into the first region and the second region and calculates the disparity for the first region and the second region individually, or corrects the position of the pixel of interest in the matching window of the right image. On the other hand, when the matching window of the right image cannot be segmented into the first region and the second region, the CPU calculates the distance on the basis of the disparities between the matching window of the right image and the matching window of the left image (first image) most similar to the matching window of the right image. Thus, the distance is calculated only when there is no bias in the feature amount.

The present invention is not limited to the above-described embodiments, and may include various modifications. For example, the embodiments have been described in detail to facilitate the understanding of the present invention, and is not necessarily limited to the embodiment that includes the entire configuration described above. The configuration of the embodiment may partly be replaced by the configuration of different embodiment, or the configuration of different embodiment may be added to the configuration of a certain embodiment. Furthermore, some of the configurations of respective embodiment may be added to, deleted from, or substituted by other configurations.

In the above embodiment, the image feature is, as an example, an edge, but is not limited to this.

Although the image features are considered on the basis of the share of the edges having edge intensity equal to or higher than a certain threshold value, the edge intensity may be an average edge intensity or the share may be represented by a certain number of vertices in a specific region.

Further, part or all of the above-described configurations, functions, and the like may be implemented by hardware by, for example, integrated circuit design. Furthermore, the above-described configuration or functions may be implemented by software by a processor (CPU) interpreting individual programs for implementing function. The information of programs, table, or files that implement individual functions may be stored on a recording device, such as a memory, a hard disc, or a solid state drive (SSD), or a recording medium, such as an IC card, an SD card, or a DVD.

### Reference Signs List

- 100: stereo camera
- 200: disparity image generation unit
- 300: in-window feature amount analysis unit
- 310: edge extraction unit
- 320: window setting unit
- 330: feature intensity analysis unit
- 340: feature bias analysis unit
- 350: reliability calculation unit
- 360: correction region extraction unit
- 400: irregularity correction unit
- 410: distance calculation unit
- 420: disparity gravity center correction unit
- 430: local matching unit
- 440: invalid disparity addition unit
- 450: road surface shape analysis unit
- 460: solid object detection unit
- 500: alert control unit
- 510: alert unit
- 520: speed control unit
- 530: suspension control unit
- 1100: stereo camera
- 1200: soft disparity image generation unit
- 1300: in-window feature amount analysis unit
- 1310: edge extraction unit
- 1320: window setting unit
- 1340: feature bias analysis unit
- 1400: correction unit
- 1420: disparity gravity center correction unit
- 1430: local matching unit
- 1440: invalid disparity determination unit
- 1500: disparity and distance measurement unit
- 1510: reliability calculation unit
- 1520: disparity image generation unit
- 1530: three-dimensional shape measurement unit
- 1600: three-dimensional analysis detection unit
- 1650: road surface shape analysis unit
- 1660: solid object detection unit
- 1700: alert control unit

## Claims

1. A vehicle-mounted environment recognition device, comprising:
an imaging unit (100) that captures a pair of a first image and a second image;
a distance calculation unit (410) that calculates a distance indicating a depth of a pixel of interest in a region of the second image on the basis of a disparity between the region of the second image and a region of the first image which is most similar to the region of the second image; and
a correction unit (400);
**characterized in that**
when the region of the second image can be segmented into a first region in which a share of an image feature of the region of the second image is less than a first threshold value and a second region in which the share of the image feature of the region of the second image is equal to or greater than the first threshold value, the correction unit segments the region of the second image into the first region and the second region and calculates a disparity for each of the first region and the second region individually, or corrects a position of the pixel of interest in the region of the second image.

2. The vehicle-mounted environment recognition device according to claim 1, wherein the image feature is an edge.

3. The vehicle-mounted environment recognition device according to claim 1, further comprising:
an invalid disparity addition unit (440),
wherein, when the region of the second image can be segmented into the first region in which the share of the image feature is less than the first threshold value and the second region in which the share of the image feature is equal to or greater than the first threshold value, the invalid disparity addition unit invalidates the disparity of the regions.

4. The vehicle-mounted environment recognition device according to claim 1, further comprising:
a feature bias analysis unit (340) that determines whether the region of the second image can be segmented into the first region and the second region by using a histogram in which the edge amount of the region of the second image is projected in a vertical direction or a horizontal direction of the second image.

5. The vehicle-mounted environment recognition device according to claim 4, wherein
when an average absolute value of an edge intensity in the region of the second image is equal to or greater than a second threshold value and the edge amount in the region of the second image is equal to or greater than a third threshold value, the feature bias analysis unit (340) determines whether the region of the second image can be segmented into the first region and the second region, and
when the average absolute value of the edge intensity in the region of the second image is less than the second threshold value, or when the edge amount in the region of the second image is less than the third threshold value, the feature bias analysis unit (340) does not determine whether the region of the second image can be segmented into the first region and the second region.

6. The vehicle-mounted environment recognition device according to claim 1, wherein
the correction unit (400) includes a disparity gravity center correction unit (420) that calculates an average position of the edge of the region of the second image and corrects the position of the pixel of interest in the region of the second image to the average position.

7. The vehicle-mounted environment recognition device according to claim 4, wherein
when it is determined that the feature bias is present in the region of the second image, the region of the second image is sub-segmented into a plurality of smaller regions with which stereo matching is performed again to perform the three-dimensional measurement with less error.

## Patentansprüche

1. An einem Fahrzeug angebrachte Umgebungserkennungsvorrichtung, umfassend:
eine Bildgebungseinheit (100), die ein Paar aus einem ersten Bild und einem zweiten Bild aufnimmt;
eine Abstandsberechnungseinheit (410), die einen Abstand berechnet, welcher eine Tiefe eines Pixels von Interesse in einem Bereich des zweiten Bilds basierend auf einer Disparität zwischen dem Bereich des zweiten Bilds und einem Bereich des ersten Bilds, der dem Bereich des zweiten Bilds am ähnlichsten ist, angibt; und
eine Korrektureinheit (400);
**dadurch gekennzeichnet, dass**, wenn der Bereich des zweiten Bilds in einen ersten Bereich, in dem ein Anteil eines Bildmerkmals des Bereichs des zweiten Bilds kleiner ist als ein erster Schwellenwert, und in einen zweiten Bereich, in dem der Anteil des Bildmerkmals des Bereichs des zweiten Bilds gleich oder größer als der erste Schwellenwert ist, segmentiert werden kann, die Korrektureinheit den Bereich des zweiten Bilds in den ersten Bereich und den zweiten Bereich segmentiert und eine Disparität für jeden aus dem ersten Bereich und dem zweiten Bereich einzeln berechnet oder eine Position des Pixels von Interesse in dem Bereich des zweiten Bilds korrigiert.

2. An einem Fahrzeug angebrachte Umgebungserkennungsvorrichtung nach Anspruch 1, wobei das Bildmerkmal eine Kante ist.

3. An einem Fahrzeug angebrachte Umgebungserkennungsvorrichtung nach Anspruch 1, ferner umfassend:
eine Ungültige-Disparität-Additionseinheit (440),
wobei, wenn der Bereich des zweiten Bilds in den ersten Bereich, in dem der Anteil des Bildmerkmals kleiner ist als der erste Schwellenwert, und den zweiten Bereich, in dem der Anteil des Bildmerkmals gleich oder größer als der erste Schwellenwert ist, segmentiert werden kann, die Ungültige-Disparität-Additionseinheit die Disparität der Bereiche für ungültig erklärt.

4. An einem Fahrzeug angebrachte Umgebungserkennungsvorrichtung nach Anspruch 1, ferner umfassend:
eine Merkmalsverzerrungsanalyseeinheit (340), die bestimmt, ob der Bereich des zweiten Bilds in den ersten Bereich und den zweiten Bereich segmentiert werden kann, indem sie ein Histogramm verwendet, in dem das Kantenausmaß des Bereichs des zweiten Bilds in eine vertikale Richtung oder eine horizontale Richtung des zweiten Bilds projiziert wird.

5. An einem Fahrzeug angebrachte Umgebungserkennungsvorrichtung nach Anspruch 4, wobei
wenn ein durchschnittlicher Absolutwert einer Kantenintensität in dem Bereich des zweiten Bilds gleich oder größer als ein zweiter Schwellenwert ist und das Kantenausmaß in dem Bereich des zweiten Bilds gleich oder größer als ein dritter Schwellenwert ist, die Merkmalsverzerrungsanalyseeinheit (340) bestimmt, ob der Bereich des zweiten Bilds in den ersten Bereich und den zweiten Bereich segmentiert werden kann, und
wenn der durchschnittliche Absolutwert der Kantenintensität in dem Bereich des zweiten Bilds kleiner als der zweite Schwellenwert ist, oder wenn das Kantenausmaß in dem Bereich des zweiten Bilds kleiner als der dritte Schwellenwert ist, die Merkmalsverzerrungsanalyseeinheit (340) nicht bestimmt, ob der Bereich des zweiten Bilds in den ersten Bereich und den zweiten Bereich segmentiert werden kann.

6. An einem Fahrzeug angebrachte Umgebungserkennungsvorrichtung nach Anspruch 1, wobei
die Korrektureinheit (400) eine Disparitätsschwerpunktskorrektureinheit (420) umfasst, die eine durchschnittliche Position der Kante des Bereichs des zweiten Bilds berechnet und die Position des Pixels von Interesse in dem Bereich des zweiten Bilds auf die durchschnittliche Position korrigiert.

7. An einem Fahrzeug angebrachte Umgebungserkennungsvorrichtung nach Anspruch 4, wobei, wenn bestimmt wird, dass die Merkmalsverzerrung in dem Bereich des zweiten Bilds vorliegt, der Bereich des zweiten Bilds in eine Vielzahl von kleineren Bereichen teilsegmentiert wird, mit denen erneut ein Stereomatching durchgeführt wird, um die dreidimensionale Messung mit geringerem Fehler durchzuführen.

## Revendications

1. Dispositif de reconnaissance d'environnement monté sur véhicule, comprenant :
une unité d'imagerie (100) qui capture une paire d'une première image et d'une seconde image ;
une unité de calcul de distance (410) qui calcule une distance indiquant une profondeur d'un pixel d'intérêt dans une région de la seconde image sur la base d'une disparité entre la région de la seconde image et une région de la première image qui est la plus similaire à la région de la seconde image ; et
une unité de correction (400) ;
**caractérisé en ce que** lorsque la région de la seconde image peut être segmentée en une première région dans laquelle une part d'une caractéristique d'image de la région de la seconde image est inférieure à une première valeur de seuil et une seconde région dans laquelle la part de la caractéristique d'image de la région de la seconde image est égale ou supérieure à la première valeur de seuil, l'unité de correction segmente la région de la seconde image en la première région et la seconde région et calcule une disparité pour chacune de la première région et de la seconde région individuellement, ou corrige une position du pixel d'intérêt dans la région de la seconde image.

2. Dispositif de reconnaissance d'environnement monté sur véhicule selon la revendication 1, dans lequel la caractéristique d'image est un bord.

3. Dispositif de reconnaissance d'environnement monté sur véhicule selon la revendication 1, comprenant en outre :
une unité d'addition de disparité invalide (440),
dans lequel, lorsque la région de la seconde image peut être segmentée en la première région dans laquelle la part de la caractéristique d'image est inférieure à la première valeur de seuil et la seconde région dans laquelle la part de la caractéristique d'image est égale ou supérieure à la première valeur de seuil, l'unité d'addition de disparité invalide invalide la disparité des régions.

4. Dispositif de reconnaissance d'environnement monté sur véhicule selon la revendication 1, comprenant en outre :
une unité d'analyse de sollicitation de caractéristique (340) qui détermine si la région de la seconde image peut être segmentée en la première région et la seconde région en utilisant un histogramme dans lequel la quantité de bord de la région de la seconde image est projetée dans une direction verticale ou une direction horizontale de la seconde image.

5. Dispositif de reconnaissance d'environnement monté sur véhicule selon la revendication 4, dans lequel
lorsqu'une valeur absolue moyenne d'une intensité de bord dans la région de la seconde image est égale ou supérieure à une deuxième valeur de seuil et la quantité de bord dans la région de la seconde image est égale ou supérieure à une troisième valeur de seuil, l'unité d'analyse de sollicitation de caractéristique (340) détermine si la région de la seconde image peut être segmentée dans la première région et la seconde région, et
lorsque la valeur absolue moyenne de l'intensité de bord dans la région de la seconde image est inférieure à la deuxième valeur de seuil, ou lorsque la quantité de bord dans la région de la seconde image est inférieure à la troisième valeur de seuil, l'unité d'analyse de sollicitation de caractéristique (340) ne détermine pas si la région de la seconde image peut être segmentée en la première région et la seconde région.

6. Dispositif de reconnaissance d'environnement monté sur véhicule selon la revendication 1, dans lequel
l'unité de correction (400) inclut une unité de correction de centre de gravité de disparité (420) qui calcule une position moyenne du bord de la région de la seconde image et corrige la position du pixel d'intérêt dans la région de la seconde image par rapport à la position moyenne.

7. Dispositif de reconnaissance d'environnement monté sur véhicule selon la revendication 4, dans lequel
lorsqu'il est déterminé que la sollicitation de caractéristique est présente dans la région de la seconde image, la région de la seconde image est sous-segmentée en une pluralité de régions plus petites avec lesquelles une correspondance stéréo est à nouveau effectuée pour effectuer la mesure tridimensionnelle avec moins d'erreur.
